# EUROPÄISCHE PATENTSCHRIFT

(11) **EP 3 381 159 B1**
(45) Veröffentlichungstag und Bekanntmachung des Hinweises auf die Patenterteilung: **10.04.2019**
(21) Anmeldenummer: 17733430.7
(22) Anmeldetag: 23.06.2017
(51) Int. Cl.: H04L 12/40

(54) **DIREKTER ZUGRIFF AUF BUSSIGNALE IN EINEM KRAFTFAHRZEUG**
DIRECT ACCESS TO BUS SIGNALS IN A MOTOR VEHICLE
ACCÈS DIRECT AUX SIGNAUX DE BUS DANS UN VÉHICULE À MOTEUR

(30) Priorität: 13.07.2016 DE 102016008957
(43) Veröffentlichungstag der Anmeldung: 03.10.2018
(73) Patentinhaber: Audi AG, 85045 Ingolstadt (DE)
(72) Erfinder: HASSE, Andre, 86565 Gachenbach (DE)
(86) Internationale Anmeldenummer: PCT/EP2017/065552
(87) Internationale Veröffentlichungsnummer: WO 2018/010938

(56) Entgegenhaltungen:
- DE-A1-102004 020 880
- DE-A1-102014 113 336
- DE-A1-102014 208 611
- US-A1- 2015 158 440

## Beschreibung

Die Erfindung betrifft ein Steuersystem für zumindest ein Kraftfahrzeug mit einer ersten Steuereinheit und einer zweiten Steuereinheit. Die erste Steuereinheit weist dabei eine Datenschnittstelle zum Koppeln der ersten Steuereinheit mit einem Fahrzeug-Datenbus auf, sowie eine erste Netzwerk-Schnittstelle zum Koppeln der ersten Steuereinheit mit einer zweiten Steuereinheit über ein Internet-Protokoll-basiertes Netzwerk auf. Die zweite Steuereinheit weist eine zweite Netzwerk-Schnittstelle zum Koppeln der zweiten Steuereinheit mit der ersten Steuereinheit über das Internet-Protokoll-basierte Netzwerk auf. Dabei ist die zweite Steuereinheit ausgelegt, zumindest ein über den Fahrzeug-Datenbus übermittelbares Steuersignal mittels der ersten Steuereinheit über den Fahrzeug-Datenbus zu senden. Die Erfindung betrifft auch ein Verfahren zum Betreiben eines Steuersystems für zumindest ein Kraftfahrzeug mit einer solchen ersten und zweiten Steuereinheit, bei welchem zumindest ein über den Fahrzeug-Datenbus übermittelbares Steuersignal über den Fahrzeug-Datenbus durch die zweite Steuereinheit mittels der ersten Steuereinheit gesendet oder empfangen wird.

In Kraftfahrzeugen ist eine Vielzahl von elektronischen Steuereinheiten zu finden, welche beispielsweise ein Steuergerät in Form eines eingebetteten Systems (Embedded System) umfassen können. Diese elektronischen Steuereinheiten sind oft an einen Fahrzeug-Datenbus wie beispielsweise den CAN-Bus, den LIN-Bus oder den FlexRay-Bus angeschlossen oder gekoppelt. Die mit dem Fahrzeug-Datenbus gekoppelten Steuereinheiten können entsprechend über den jeweiligen Fahrzeug-Datenbus Botschaften mit einem oder mehreren Steuersignalen als Datensignal senden und/oder empfangen. Es können jedoch auch eine oder mehrere weitere Steuereinheiten vorhanden sein, welche nicht mit dem jeweiligen Fahrzeug-Datenbus gekoppelt sind. Stattdessen kann eine weitere Steuereinheit beispielsweise über ein Internet-Protokoll-basiertes (IP-) Netzwerk, zum Beispiel über Ethernet, an eine mit dem Fahrzeug-Datenbus gekoppelte Steuereinheit angebunden sein. Soll nun über den Fahrzeug-Datenbus von der weiteren Steuereinheit ein Steuersignal gesendet oder empfangen werden, so muss in der mit dem Fahrzeug-Datenbus gekoppelten Steuereinheit ein spezielles Weiterleitungsanwendungsprogramm, eine sogenannte Routing Applikation, vorhanden sein. Diese bereitet über das IP Netzwerk von der weiteren Steuereinheit empfangenen Steuersignale für das Übermitteln über den Fahrzeug-Datenbus auf.

Dabei müssen bereits zur Entwicklungszeit des Weiterleitungsanwendungsprogramms sämtliche Steuersignale, welche zukünftig gesendet und/oder empfangen werden sollen, bekannt und auch bereits an den entsprechenden Fahrzeug-Datenbus angepasst sein. Damit ist das Weiterleitungsanwendungsprogramm sehr auf den jeweiligen Anwendungsfall spezialisiert und kann in anderen Steuereinheiten oder Steuergeräten ohne eine Anpassung und gegebenenfalls erneutes Kompilieren nicht wieder verwendet werden.

Die US 2012/0185876 A1 offenbart ein Steuergerät, bei welchem eine Zwischenschicht zwischen einem Anwendungsprogramm und einem Plattformprogramm genutzt wird um eine Effizienz bei einem Entwicklungsprozess zu erhöhen.

Die DE 10 2010 004786 A1 beschreibt ein Verfahren zum rechnergestützten Bereitstellen einer Entwicklungsumgebung zur Implementierung von Sicherheitsanwendungen in einer Fahrzeugarchitektur. Dabei wird eine Mehrzahl von Sicherheitsmodulen mit jeweiligen Sicherheitsanwendungen bereitgestellt, wobei die Sicherheitsanwendungen eines jeweiligen Sicherheitsmoduls über eine oder mehrere Schnittstellen durch externe Anwendungen aufgerufen werden können.

Die US 2012/0179730 A1 offenbart ein Verfahren und eine Vorrichtung für ein System zur Datenspeicherung, bei welcher einer Anwendungsschicht ein sogenannter Mountpoint zugeordnet wird um Dateien freizugeben.

Die DE 10 2014 113 336 A1 offenbart ein Verfahren umfassend das Empfangen einer ersten Information, wobei die erste Information von einer oder mehreren Entitäten eines internen Netzwerks stammt, das Bereitstellen der ersten Information und/oder einer auf der ersten Information beruhenden Information zumindest teilweise in Abhängigkeit einer Zuordnung eines Informationstyps der ersten Information und/oder der auf der ersten Information beruhenden Information zu einer ersten Gruppe von Entitäten des externen Netzwerks derart, dass die erste Information und/oder die auf der ersten Information beruhende Information nur durch die Entitäten der ersten Gruppe von Entitäten des externen Netzwerks erhältlich ist.

Der Erfindung liegt die Aufgabe zu Grunde, den Entwicklungsaufwand für eine Signalkommunikation über Fahrzeug-Datenbusse in zumindest einem Kraftfahrzeug zu reduzieren.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft ein Steuersystem für zumindest ein Kraftfahrzeug mit einer ersten und mit einer zweiten Steuereinheit. Die erste Steuereinheit weist eine Datenschnittstelle zum Koppeln der ersten Steuereinheit mit einem Fahrzeug-Datenbus auf, sowie eine erste Netzwerk-Schnittstelle zum Koppeln der ersten Steuereinheit mit einer zweiten Steuereinheit über ein Internet-Protokoll-basiertes (IP-) Netzwerk auf. Durch das IP-Netzwerk sind insbesondere Punkt-zu-Punkt Verbindungen ermöglicht. Die zweite Steuereinheit weist eine zweite Netzwerk-Schnittstelle zum Koppeln der zweiten Steuereinheit mit der ersten Steuereinheit über das Internet-Protokoll-basierte Netzwerk auf. Dabei ist die zweite Steuereinheit ausgelegt, zumindest ein über den Fahrzeug-Datenbus übermittelbares Steuersignal mittels, also via, der ersten Steuereinheit über den Fahrzeug-Datenbus zu senden und/oder zu empfangen. Die zweite Steuereinheit kann also dank ihrer Kopplung zur ersten Steuereinheit auf den Fahrzeug-Datenbus zugreifen und über diesen zumindest ein Steuersignal, beispielsweise mehrere Steuersignale senden und/oder empfangen.

Dabei ist die erste Steuereinheit ausgelegt, das zumindest eine über den Fahrzeug-Datenbus übermittelbare Steuersignal als zumindest eine von einem für den Fahrzeug-Datenbus spezifischen Busprotokoll unabhängig zugängliche Geräteressource eines Betriebssystemkerns des ersten Steuergeräts bereitzustellen oder zu mounten. Die zweite Steuereinheit ist ausgelegt, die Geräteressource der ersten Steuereinheit über ein Netzwerkprotokoll des Internet-Protokoll-basierten Netzwerks an oder für zumindest ein Anwendungsprogramm in der zweiten Steuereinheit bereitzustellen oder zu mounten. Das zumindest eine durch die erste Steuereinheit über den Fahrzeug-Datenbus übermittelbare Steuersignal kann also als im IP-Netzwerk verfügbare Geräteressource zur Signalkommunikation gemountet werden, beispielsweise über das Network File System (NFS) von Sun Microsystems. Die zweite Steuereinheit mountet dann die verfügbare Geräteressource der ersten Steuereinheit und kann in Abhängigkeit jeweils gesetzter Lese- und Schreib-Rechte vollkommen transparent lesend und schreibend auf die zumindest eine Geräteressource zugreifen.

Das hat den Vorteil, dass eine Steuereinheit, die zweite Steuereinheit, transparent und leicht für Entwickler nachvollziehbar auf Kommunikationssignale zugreifen kann, welche in einer anderen Steuereinheit oder einem anderen Steuergerät, der ersten Steuereinheit, verfügbar sind. Auch kann eine Steuereinheit, hier die zweite Steuereinheit, ohne direkt physisch mit einem Fahrzeug-Datenbus gekoppelt zu sein über die Grenzen der eigenen Einheit oder des eigenen Steuergerätes hinweg Steuersignale über den Fahrzeug-Datenbus übermitteln. Es kann hier also eine Vernetzung zwischen Steuereinheiten realisiert werden. Die Vernetzung kann unter anderem auch dazu genutzt werden, eine Fehleranfälligkeit, beispielsweise bei einem Ausfall einer Schnittstelle zu einem Fahrzeug-Datenbus zu kompensieren.

Da die Geräteressource und somit die Möglichkeit zum Senden und Empfangen des Steuersignals über den Fahrzeug-Datenbus für die zweite Steuereinheit über ein Netzwerkprotokoll bereitgestellt ist, ist die zweite Steuereinheit flexibel an auch unterschiedliche erste Steuereinheiten ankoppelbar, ohne dass entsprechende Anwendungsprogramme in der zweiten Steuereinheit an eine veränderte erste Steuereinheit angepasst werden müssten. Auch kann ein entsprechendes Anwendungsprogramm von der zweiten Steuereinheit auf die erste Steuereinheit oder andere Steuereinheiten in dem IP-Netzwerk verschoben werden, da in allen Steuereinheiten des IP-Netzwerks die entsprechende Geräteressource mit minimalem Aufwand als von dem Busprotokoll unabhängige Schnittstelle zur Verfügung gestellt werden kann. Damit kann beispielsweise auch in Abhängigkeit einer Auslastung einer Rechenkapazität jeweiliger Steuereinheiten ein Anwendungsprogramm dynamisch auf jeweiligen unterschiedlichen Steuereinheiten ausgeführt werden, beispielsweise um Strom zu sparen. Ein Anpassen des Anwendungsprogramms auf die unterschiedlichen Steuereinheiten ist dabei aufgrund des gemäß dem Netzwerkprotokoll standardisierten Zugriffs der zweiten Steuereinheit auf die Geräteressource, und somit der entsprechenden Anwendungsprogramme auf den Fahrzeug-Datenbus nicht erforderlich.

Auch in der ersten Steuereinheit ist somit kein Anpassen an jeweils unterschiedliche zweite Steuereinheiten oder unterschiedliche Anwendungsprogramme oder Applikationen erforderlich. Überdies ist über die standardmäßig in Betriebssystemen für Geräteressourcen verfügbare Rechteverwaltung auch auf einfache Weise ein Zugriffsschutz vor unbefugtem Lesen oder unbefugtem Schreiben, also von unbefugtem Senden oder Empfangen von Steuersignalen über den Fahrzeug-Datenbus realisierbar. Überdies kann jeder Nutzer, also sowohl ein Anwendungsprogramm als auch ein Entwickler, transparent in einem Dateimanager oder Filemanager sehen, welche Steuersignale in der ersten Steuereinheit und damit auch in dem Internet-Protokoll-basierten Netzwerk und damit der anderen, zweiten Steuereinheit zur Verfügung stehen und somit über den Fahrzeug-Datenbus übermittelbar sind.

Dies alles vereinfacht den Entwicklungsprozess für Anwendungsprogramme und damit die Signalkommunikation im Kraftfahrzeug ganz entscheidend, da die Flexibilität für das Ausführen von Anwendungsprogrammen in den Steuereinheiten erhöht wird und ein Anpassen von Steuereinheiten und Anwendungsprogramm auf individuell vorliegende Kommunikationsstrukturen zumindest größtenteils überflüssig gemacht wird.

In einer vorteilhaften Ausführungsform ist vorgesehen, dass der Fahrzeug-Datenbus einen CAN-Datenbus oder einen LIN-Datenbus oder einen FlexRay-Datenbus umfasst. Gerade für die genannten Datenbusse, welche im Kraftfahrzeugbereich verbreitet sind, ist ein vereinfachter Zugriff auf über den jeweiligen Fahrzeug-Datenbus übermittelbare Steuersignale wünschenswert und trägt erheblich zur Vereinfachung der Entwicklung von Anwendungsprogrammen bei.

In einer weiteren vorteilhaften Ausführungsform ist vorgesehen, dass die zumindest eine Geräteressource, bevorzugt sämtliche Geräteressourcen, über ein Netzwerk-Dateisystem in dem Internet-Protokoll-basierten Netzwerk nutzbar oder bereitstellbar ist. Bei dem Netzwerk-Dateisystem kann es sich insbesondere um das Network File System (NFS) von Sun Microsystems oder ein vergleichbares Dateisystem mit Rechteverwaltung und bei welchem die Benutzer auf Dateien, die sich auf einem entfernten Rechner befinden, so zugreifen können, als ob sie lokal auf ihrem Rechner abgespeichert wären, handeln, oder das Netzwerkdateisystem ein solches Network File System oder ein vergleichbares Dateisystem umfassen.

Das hat den Vorteil, dass so auf besonders einfache Art und Weise auf die übermittelbaren Steuersignale zugegriffen werden kann, bzw. ein Zugriff auf besonders einfache Weise für die zweite Steuereinheit ermöglicht ist. Das zweite Steuergerät kann so über den Fahrzeug-Datenbus Steuersignale senden oder empfangen, ohne überhaupt eine Kenntnis darüber zu haben, dass die entsprechenden Steuersignale über den Fahrzeug-Datenbus übermittelt werden oder übermittelbar sind. Auch damit wird das Senden und Empfangen von Steuersignalen in einem Kraftfahrzeug vereinfacht.

In einer weiteren vorteilhaften Ausführungsform ist vorgesehen, dass das Internet-Protokoll-basierte Netzwerk ein drahtloses Netzwerk umfasst oder ist. Insbesondere kann das drahtlose Netzwerk ein drahtloses lokales Netzwerk (Wireless Local Area Network, WLAN) umfassen. Alternativ oder ergänzend kann das Internet-Protokoll-basierte Netzwerk auch ein lokales Netzwerk (Local Area Network, LAN) umfassen. Gerade durch ein drahtloses Netzwerk wird eine besonders große Flexibilität geschaffen. So kann einerseits die zweite Steuereinheit unabhängig von einer physischen Verortung oder Kopplung ein Steuersignal mittels der ersten Steuereinheit über den Fahrzeug-Datenbus senden oder empfangen. Andererseits kann auch besonders flexibel ein alternativer Zugriff über eine andere erste Steuereinheit oder eine andere zweite Steuereinheit erfolgen. Gerade wenn ein Anwendungsprogramm potentiell in unterschiedlichen zweiten Steuereinheiten zum Einsatz kommt, ist dies vorteilhaft, um so den Zugriff auf einen vorgegebenen Fahrzeug-Datenbus sicherzustellen.

Überdies ermöglicht der Zugriff über ein drahtloses Netzwerk auch einen Zugriff auf den Fahrzeug-Datenbus beziehungsweise ein Senden und oder Empfangen von Steuersignalen über den Fahrzeug-Datenbus durch die zweite Steuereinheit, wenn sich die zweite Steuereinheit außerhalb des Kraftfahrzeugs der ersten Steuereinheit befindet. Dies kann beispielsweise für Diagnosezwecke günstig sein. Ein drahtloses lokales Netzwerk ist dabei insofern besonders vorteilhaft, als dass die Reichweite die Reichweite anderer drahtloser Technologien wie beispielsweise Bluetooth übertrifft. Somit wird auch ein kraftfahrzeugübergreifender Austausch von Steuersignalen bzw. ein kraftfahrzeugübergreifender Zugriff auf den Fahrzeug-Datenbus ermöglicht. Die kann beispielsweise in einer realen Fahrsituation erfolgen.

Es kann somit in einer besonders vorteilhaften Ausführungsform vorgesehen sein, dass die erste Steuereinheit Teil eines ersten Kraftfahrzeugs ist und die zweite Steuereinheit Teil eines zweiten Kraftfahrzeugs. Dadurch kann das zweite Kraftfahrzeug auf Steuersignale, welche über den Fahrzeug-Datenbus des ersten Kraftfahrzeugs zur Verfügung stehen, zugreifen. So kann beispielsweise wenn das zweite Kraftfahrzeug hinter dem ersten Kraftfahrzeug fährt die zweite Steuereinheit Geschwindigkeit und/oder Beschleunigungswerte als Steuersignale von der ersten Steuereinheit empfangen und so frühzeitig Brems- und/oder Beschleunigungsmanöver des zweiten Kraftfahrzeugs einleiten. Auch weitere Manöver des vorausfahrenden ersten Kraftfahrzeugs, zum Beispiel aus dem an den Fahrzeug-Datenbus abrufbaren oder über diesen übermittelbaren Steuersignal ableitbare Fahrmanöver, können so frühzeitig durch die zweite Steuereinheit im zweiten Kraftfahrzeug erkannt und somit im zweiten Kraftfahrzeug berücksichtigt werden. Beispielsweise können hier auch Abbiege- oder Fahrtrichtungsänderungsmanöver berücksichtigt werden.

Es kann entsprechend in einer weiteren Ausführungsform vorgesehen sein, dass das übermittelbare Steuersignal Fahrzeugdaten des ersten Kraftfahrzeugs umfasst oder repräsentiert. Insbesondere kann das Steuersignal Beschleunigungsdaten des ersten Kraftfahrzeugs, insbesondere einer Längs- und/oder Querbeschleunigung, und/oder Geschwindigkeitsdaten des ersten Kraftfahrzeugs und/oder Routendaten eines Navigationssystems des ersten Kraftfahrzeugs umfassen oder repräsentieren. Dadurch wird die Signalkommunikation zwischen den Fahrzeugen auf besonders einfache und elegante Weise verbessert, da das zweite Kraftfahrzeug praktisch ohne signalwegsbedingte zeitliche Verzögerung und sensorische Ungenauigkeit Information über das erste Kraftfahrzeug erhält.

In einer weiteren Ausführungsform kann vorgesehen sein, dass die zweite Steuereinheit ausgelegt ist, das übermittelbare Steuersignal lediglich zu empfangen. Es kann somit sichergestellt werden, dass die zweite Steuereinheit des zweiten Kraftfahrzeugs nicht missbräuchlich Steuersignale über den Fahrzeug-Datenbus des ersten Kraftfahrzeugs versendet. Dies kann vorliegend besonders einfach durch die in den Betriebssystemkern vorhandene Rechteverwaltung realisiert werden.

In einer weiteren vorteilhaften Ausführungsform ist vorgesehen, dass die Geräteressource ein Gerät oder ein virtuelles Gerät, ein sogenanntes "Device" , welches logisch am Gerätebaum oder Device-Tree des Betriebssystemkerns angebunden, also "aufgehängt", "bereitgestellt" oder "gemountet" sein kann, und/oder eine Datei umfasst oder ist. Das virtuelle Gerät oder Device kann dabei an einem Gerätebaum oder Device-Tree des Betriebssystemkerns aufgehängt oder gemountet sein. Insbesondere kann die Datei eine Systemdatei zum Laden und verfügbar Machen von zumindest einem Standardgerätetreiber und zum Laden eines Dateisystemtreibers sowie zum Bereitstellen eines Datenträgerzugriffs umfassen. Es kann sich also bei der Systemdatei um eine Systemdatei nach der aus MS-DOS bekannten io.sys handeln. Insbesondere kann ein Empfangen bzw. Senden des Steuersignals als Lesen beziehungsweise Schreiben der Datei implementiert sein. Das hat den Vorteil, dass die oben genannten Vorteile besonders einfach realisierbar sind, da sie für virtuelle Geräte oder Dateien bereits standardmäßig in Betriebssystemen nutzbar sind. Somit kann beispielsweise eine Rechteverwaltung oder ein Teilen der Geräteressourcen über ein Netzwerkprotokoll auf besonders einfache Weise umgesetzt werden, ohne dass hier eine aufwändige individuelle Anpassung des Anwendungsprogramms an die Steuereinheit oder das entsprechende Betriebssystem erforderlich wäre.

In einer weiteren vorteilhaften Ausführungsform ist vorgesehen, dass über entsprechende Befehle oder Steuerbefehle an den Betriebssystemkern der ersten Steuereinheit die zumindest eine bereitgestellte oder gemountete Geräteressource für zumindest ein Anwendungsprogramm in der zweiten Steuereinheit zugänglich oder unzugänglich machbar ist. So kann beispielsweise die bereitgestellte Geräteressource für ein Anwendungsprogramm mit dem POSIX-konformen Befehl "open()" oder einem gleich wirkenden Befehl zugänglich und/oder mit dem POSIX-konformen Befehl "close()" oder einen gleich wirkenden Befehl unzugänglich gemacht werden. Über oder mit entsprechenden weiteren Befehlen oder Steuerbefehlen an den Betriebssystemkern ist ein zu sendendes übermittelbares Steuersignal über den Fahrzeug-Datenbus sendbar und/oder ein zu empfangendes übermittelbares Steuersignal über den Fahrzeug-Datenbus empfangbar. So kann ein Steuersignal beispielsweise mit dem POSIX-konformen Befehl "write()" oder einen gleich wirkenden auf die Geräteressource bezogenen Befehl über den Datenbus gesendet werden und/oder das Steuersignal mit dem POSIX-konformen Befehl "read()" oder einen gleich wirkenden auf die Geräteressource bezogenen Befehl über den Fahrzeug-Datenbus empfangen werden. Das hat den Vorteil, dass auf bekannte Weise besonders einfach und intuitiv nachvollziehbar unabhängig von der Art des Fahrzeug-Datenbusses oder einem spezifischen Busprotokoll die jeweiligen Steuersignale gesendet und/oder empfangen werden können. Dadurch, dass die gemountete Geräteressource für ein jeweiliges Anwendungsprogramm und damit auch für eine jeweilige zweite Steuereinheit individuell zugänglich und unzugänglich gemacht werden kann, wird auch auf einfache Weise ein hohes Maß an Sicherheit erreicht und Fehlfunktionen und fehlerhaften Zugriffen vorgebeugt.

Die Erfindung betrifft auch ein Verfahren zum Betreiben eines Steuersystems für zumindest ein Kraftfahrzeug, wobei das Steuersystem zwei Steuereinheiten umfasst. Dabei weist die erste Steuereinheit eine Datenschnittstelle zum Koppeln der ersten Steuereinheit mit einem Fahrzeug-Datenbus auf, sowie eine erste Netzwerk-Schnittstelle zum Koppeln der ersten Steuereinheit mit der zweiten Steuereinheit über ein Internet-Protokoll-basiertes Netzwerk auf. Die zweite Steuereinheit weist eine zweite Netzwerk-Schnittstelle zum Koppeln der zweiten Steuereinheit mit der ersten Steuereinheit über das Internet-Protokoll-basierte Netzwerk auf.

Ein Schritt des Verfahrens ist hier ein Senden oder Empfangen von zumindest einem über den Fahrzeug-Datenbus übermittelbaren Steuersignal über den Fahrzeug-Datenbus durch die zweite Steuereinheit mittels der ersten Steuereinheit. Ein weiterer Schritt ist ein Bereitstellen des zumindest einen über den Fahrzeug-Datenbus übermittelbaren Steuersignals als zumindest eine, von einem für den Fahrzeug-Datenbus spezifischen Busprotokoll unabhängig zugängliche Geräteressource eines Betriebssystemkerns des ersten Steuergeräts durch die erste Steuereinheit. Ein anderer Schritt ist ein Bereitstellen der Geräteressource der ersten Steuereinheit über ein Netzwerkprotokoll des Internet-Protokoll-basierten Netzwerks an zumindest ein Anwendungsprogramm in der zweiten Steuereinheit durch die zweite Steuereinheit. Dabei umfasst das Senden oder Empfangen des übermittelbaren Steuersignals ein Zugreifen des Anwendungsprogramms der zweiten Steuereinheit auf die Geräteressource der ersten Steuereinheit über das Netzwerkprotokoll.

Vorteile und vorteilhafte Ausführungsformen des Verfahrens entsprechen hier Vorteilen und vorteilhaften Ausführungsformen des Steuersystems.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Ausführungsbeispiele der Erfindung werden nachfolgend anhand schematischer Zeichnungen näher erläutert. Dabei zeigt:
- Fig. 1: eine beispielhafte Ausführungsform einer ersten Steuereinheit für ein Steuersystem; und
- Fig. 2: ein Steuersystem für zumindest ein Kraftfahrzeug gemäß einer beispielhaften Ausführungsform.

In den Figuren werden gleiche oder funktionsgleiche Elemente mit den gleichen Bezugszeichen versehen.

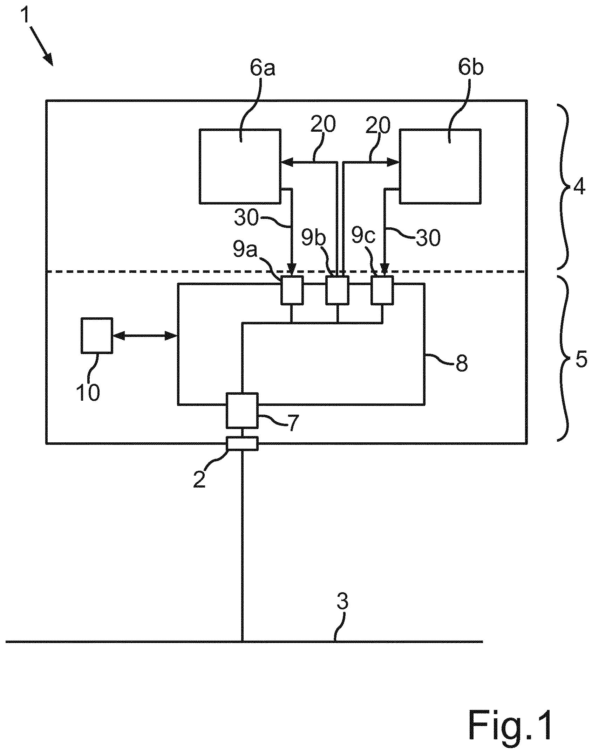

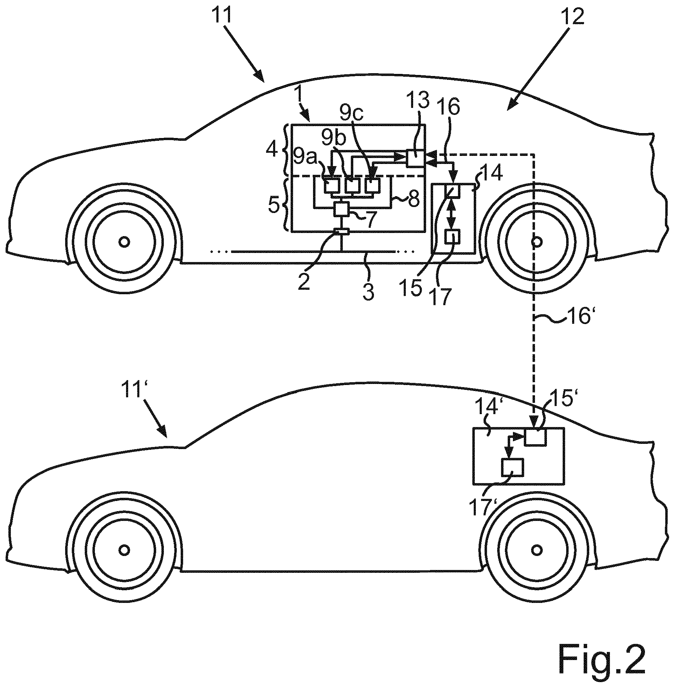

Fig. 1 zeigt dabei eine beispielhafte Ausführungsform einer ersten elektronischen Steuereinheit für ein Kraftfahrzeug. Zur besseren Verständlichkeit der Funktionsweise der ersten Steuereinheit 1 wurde vorliegend zunächst auf eine Darstellung der erst in Bezug zu einer zweiten elektronischen Steuereinheit 14, 14' (Fig. 2) relevanten Komponenten verzichtet, insbesondere auf die Darstellung einer ersten Netzwerk-Schnittstelle 13 (Fig. 2) und eines Internet-Protokoll-basierten Netzwerks 16, 16' (Fig. 2). Das Zusammenspiel der ersten Steuereinheit 1 mit der zumindest einen zweiten Steuereinheit 14, 14' (Fig. 2)geht aus Fig. 2 hervor.

Die erste elektronische Steuereinheit 1 weist vorliegend eine Datenschnittstelle 2 zum Koppeln der Steuereinheit 1 an einen Fahrzeug-Datenbus 3 auf. Die Steuereinheit 1 weist ferner in diesem Beispiel eine Anwendungsschicht 4 sowie eine Betriebssystemschicht 5 auf. In der Anwendungsschicht 4 ist hier zumindest ein Anwendungsprogramm 6a, 6b, vorliegend ein erstes Anwendungsprogramm 6a und ein zweites Anwendungsprogramm 6b, vorhanden. Durch die beiden Anwendungsprogramme 6a, 6b ist zumindest jeweils ein über den Fahrzeug-Datenbus 3 übermittelbares Steuersignal erzeugbar oder auswertbar. Die beiden Anwendungsprogramme 6a, 6b können bei einer Kopplung der ersten Steuereinheit 1 mit der zweiten Steuereinheit 14, 14' (Fig. 2) über das Internet-Protokoll-basierte Netzwerk 16, 16' (Fig. 2) entsprechend dem vorgestellten Wirkprinzip auch in der zweiten Steuereinheit 14, 14' (Fig. 2) vorliegen und ausgeführt werden oder ausführbar sein.

In der Betriebssystemschicht 5 der ersten Steuereinheit 1 ist vorliegend durch einen Betriebssystemkern ein Kommunikationsendpunkt 7 oder Socket des Fahrzeug-Datenbusses 3 bereitgestellt. Der Kommunikationsendpunkt 7 kann in einer alternativen Ausführungsform auch durch eine Betriebssystemkern-Erweiterung bereitgestellt sein. Dabei ist der Kommunikationsendpunkt 7 hier zum Übermitteln von dem übermittelbaren Steuersignal über den Fahrzeug-Datenbus 3 gemäß einem für den Fahrzeug-Datenbus 3 spezifischen Busprotokoll ausgebildet. In der Betriebssystemschicht 5 ist im gezeigten Beispiel eine Schnittstellenschicht 8 vorhanden, welche das übermittelbare Steuersignal als eine von dem für den Fahrzeug-Datenbus 3 spezifischen Busprotokoll unabhängig zugängliche Geräteressource 9a, 9b, 9c, vorliegend eine erste Geräteressource 9a, eine zweite Geräteressource 9b und eine dritte Geräteressource 9c des Betriebssystemkerns bereitstellt. Beispielsweise repräsentiert die erste Geräteressource 9a eine Geschwindigkeit, die zweite Ressource 9b eine Zündung und die dritte Ressource 9c eine Temperatur.

Die Schnittstellenschicht 8 ist im gezeigten Beispiel durch eine in der ersten Steuereinheit 1 hinterlegte oder bereitgestellte Konfigurationsdatei 10 konfigurierbar ist, welche im gezeigten Beispiel jedem übermittelbaren Steuersignal eine Geräteressource 9a, 9b, 9c zuordnet. Dabei ist die erste Steuereinheit 1 hier ausgelegt, bei einem Neustart der ersten Steuereinheit 1 die Konfigurationsdatei 10 einzulesen und sich so selbst zu konfigurieren sowie die dem zumindest einen übermittelbaren Steuersignal entsprechende Geräteressource 9a, 9b, 9c zur Verfügung zu stellen, also zu mounten. Der Konfigurationsdatei 10 ist vorliegend zu entnehmen, welche Geräteressource 9a, 9b, 9c von der Schnittstellenschicht 8 angelegt werden soll und in welchem Datensignal, beispielsweise in welcher Bus-Botschaft, das jeweilige Steuersignal an welcher Position enthalten ist.

Im vorliegenden Ausführungsbeispiel kann nun über entsprechende (Steuer-) Befehle an den Betriebssystemkern durch die Schnittstellenschicht 8 die zumindest eine bereitgestellte Geräteressource 9a, 9b, 9c für das zumindest eine, hier die beiden Anwendungsprogramme 6a, 6b zugänglich und unzugänglich gemacht werden. Dies kann beispielsweise durch ein auf die jeweilige Geräteressource 9a, 9b, 9c gerichteten Steuerbefehl wie "open()" und "close()" erfolgen. Des Weiteren können über entsprechende weitere Befehle an den Betriebssystemkern ein zu sendendes übermittelbares Steuersignal gesendet und/oder ein zu empfangendes übermittelbares Steuersignal empfangen werden. Dies kann beispielsweise durch ein auf die jeweilige Geräteressource 9a, 9b, 9c gerichteten ersten Steuerbefehl "read()" 20 und/oder zweiten Steuerbefehl "write()" 30 erfolgen.

Sind nun beispielsweise die Geräteressourcen 9a, 9b, 9c als Gerät, das heißt sogenannte "Device" im "Device-Tree" oder Gerätebaum des Betriebssystems bereitgestellt oder gemountet, so kann vorliegend auf die jeweils den Geräteressourcen 9a, 9b, 9c zugeordneten Steuersignale über den Device-Tree zugegriffen werden. So kann beispielsweise vorliegend die erste Geräteressource 9a unter /dev/sendesignale/Geschwindigkeit, die zweite Geräteressource 9b unter /dev/empfangssignale/Zündung und die dritte Geräteressource 9c unter dev/sendesignale/Temperatur im Device-Tree gemountet sein. Das erste Anwendungsprogramm 6a kann so vorliegend beispielsweise den ersten Steuerbefehl "read()" 20 auf die zweite Geräteressource 9b gerichtet ausführen und erhält dann den aktuellen Status der Zündung geliefert. Selbiges gilt im gezeigten Beispiel auch für das zweite Anwendungsprogramm 6b. Das erste Anwendungsprogramm 6a kann im gezeigten Beispiel den zweiten Steuerbefehl "write()" 30 auf die erste Geräteressource 9a ausführen, um den entsprechenden Wert des Steuersignals, vorliegend der Geschwindigkeit, zu ändern. Entsprechend kann im gezeigten Beispiel das zweite Anwendungsprogramm 6b den zweiten Steuerbefehl "write()" 30 auf die dritte Geräteressource 9c ausführen und dort einen Wert für die Temperatur setzen. Dadurch, dass die Geräteressourcen vorliegend als virtuelle Geräte oder Devices im Device-Tree des Betriebssystems aufgehängt oder gemountet sind, kann hier die Standardrechteverwaltung für den Schutz von Steuersignalen vor einem unbefugten Lesen und Schreiben genutzt werden. So kann beispielsweise verhindert werden, dass als Folge eines Fehlers das zweite Anwendungsprogramm 6b irrtümlicherweise den zweiten Steuerbefehl "write()" 30 auf die erste Geräteressource 9a anwendet.

Wird nun ein Datensignal an dem Fahrzeug-Datenbus 3 und somit auch dem Kommunikationsendpunkt 7 bereitgestellt, so wird dieses Datensignal, welches beispielsweise das übermittelbare Steuersignal umfasst, welches vorliegend einen aktuellen Status der Zündung repräsentiert, als Eigenschaft der zugehörigen Geräteressource 9a, 9b, 9c, vorliegend also der zweiten Geräteressource 9b, in der Schnittstellenschicht 8 hinterlegt. Somit kann das in dem übermittelten Datensignal enthaltene Steuersignal in der Steuereinheit 1 abgespeichert werden und somit den Anwendungsprogrammen 6a, 6b dauerhaft und stets aktuell zur Verfügung gestellt werden. Handelt sich bei den Fahrzeug-Datenbus 3 um einen ereignisbasierten Fahrzeug-Datenbus 3, so kann das entsprechende Steuersignal (bzw. das gemäß dem Busprotokoll zugeordnete Datensignal) auch beispielsweise erst auf einen Steuerbefehl wie den ersten Steuerbefehl "read()" 20 hin über den Fahrzeug-Datenbus 3 angefordert werden.

Umgekehrt, wenn also das zu übermittelnde Steuersignal ein zu sendendes Steuersignal von einem der Anwendungsprogramme 6a, 6b ist, kann über einen entsprechenden Befehl, vorliegend den zweiten Steuerbefehl "write()" 30 eine entsprechende Größe, beispielsweise ein Messwert eines an die Steuereinheit 1 angeschlossenen Sensors oder eine von dem Messwert durch das entsprechende Anwendungsprogramm 6a, 6b abgeleiteten Größe als Eigenschaft der jeweiligen Geräteressource 9a, 9b, 9c bereitgestellt und genutzt werden. Die entsprechende Eigenschaft der Geräteressource 9a, 9b, 9c kann dann beispielsweise auch von einem anderen Anwendungsprogramm und/oder einer anderen Steuereinheit, zum Beispiel der zweiten Steuereinheit 14, 14' (Fig. 2), benutzt werden. Vorliegend kann das erste Anwendungsprogramm 6a über den zweiten Steuerbefehl "write()" 30 einen Wert für die Geschwindigkeit als Eigenschaft der ersten Geräteressource 9a setzen. Das zweite Anwendungsprogramm 6b kann vorliegend über den entsprechenden zweiten Steuerbefehl "write()" 30 in der dritten Geräteressource 9c einen Wert für eine Temperatur hinterlegen. Die Anwendungsprogramme 6a, 6b können dabei wie oben erwähnt und unten verdeutlicht auch außerhalb der ersten Steuereinheit 1, beispielsweise in der weiteren Steuereinheit 14, 14' (Fig. 2) vorhanden sein. Diese Werte können dann durch die Schnittstellenschicht 8 in ein Datensignal überführt werden, welches gemäß dem Busprotokoll über den Fahrzeug-Datenbus 3 übermittelt werden kann.

Ist nun beispielsweise der Wert für die Geschwindigkeit und der Wert für die Temperatur gemäß dem für den Datenbus 3 spezifischen Busprotokoll in einem einzigen gemeinsamen Datensignal zu übermitteln, so fügt die Schnittstellenschicht 8 gemäß den Vorgaben des Busprotokolls die von den beiden Anwendungsprogrammen 6a, 6b für vorliegend Geschwindigkeit und Temperatur mittels des entsprechenden Steuerbefehls, hier des zweiten Steuerbefehlt "write()" 30, hinterlegten Werte zusammen. Somit werden in Folge die Steuersignale, welche von den unterschiedlichen Anwendungsprogrammen 6a, 6b gesendet werden, gemeinsam über den Kommunikationsendpunkt 7 in dem Fahrzeug-Datenbus 3 bereitgestellt und über diesen übermittelt.

Damit müssen beispielsweise wenn die elektronische erste Steuereinheit 1 bzw. die Anwendungsprogramme 6a, 6b in einem anderen Kraftfahrzeug mit anderen Kommunikationsbeziehungen, also beispielsweise mit einer anderen Bus-Identifikationsnummer für die erste Steuereinheit 1 an dem Fahrzeug-Datenbus 3, diese Anwendungsprogramme 6a, 6b nicht neu kompiliert werden, sondern können ohne weiteres weiter verwendet werden. Einzig die Konfigurationsdatei 10 muss in diesem Fall aktualisiert werden. Damit sind die Anwendungsprogramme 6a, 6b bei konsequenter Anwendung des dargelegten Prinzips auch in weiteren elektronischen erstem Steuereinheiten 1 mit oben genannten Eigenschaften ohne weiteres einsetzbar. Es wird so auf einfache Weise eine große Flexibilität bezüglich der auf der Hardware der jeweiligen elektronischen ersten Steuereinheiten 1 durchführbaren oder ausführbaren Anwendungsprogramme 6a, 6b erreicht.

Fig. 2 zeigt eine beispielhafte Ausführungsform eines Steuersystems für zumindest ein Kraftfahrzeug. Das Steuersystem 12 umfasst dabei die erste Steuereinheit 1, die im Wesentlichen der in Fig. 1 gezeigten ersten Steuereinheit 1 entspricht: Auf die beiden Anwendungsprogramme 6a, 6b, welche zusätzlich zu dem in Fig. 2 Gezeigten auch in der ersten Steuereinheit 1 vorhanden sein können, aber nicht müssen, ist vorliegend verzichtet. Stattdessen ist im gezeigten Beispiel nun die erste Netzwerk-Schnittstelle 13 der ersten Steuereinheit 1 zum Koppeln der ersten Steuereinheit 1 mit zumindest einer zweiten Steuereinheit 14, 14' dargestellt.

Das gezeigte Steuersystem 12 weist vorliegend eine zweite Steuereinheit 14 mit einer zweiten Netzwerk-Schnittstelle 15 zum Koppeln der zweiten Steuereinheit 14 mit der ersten Steuereinheit 1 über ein Internet-Protokoll-basiertes Netzwerk 16 auf. Die zweite Steuereinheit 14 ist vorliegend wie auch die erste Steuereinheit 1 in einem ersten Kraftfahrzeug 11 angeordnet und im gezeigten Beispiel über ein lokales Netzwerk 16, zum Beispiel über Ethernet, an die erste Steuereinheit 1 gekoppelt.

Das hier gezeigte Steuersystem 12 weist in dem dargestellten Beispiel auch eine weitere zweite Steuereinheit 14' mit einer weiteren zweiten Netzwerk-Schnittstelle 15' zum Koppeln der weiteren zweiten Steuereinheit 14' mit der ersten Steuereinheit 1 über ein Internet-Protokoll-basiertes Netzwerk 16' auf. Vorliegend ist die weitere zweite Steuereinheit 14' mit der ersten Steuereinheit 1 über ein drahtloses Netzwerk 16, beispielsweise ein lokales drahtloses Netzwerk in Form eines WLAN, gekoppelt. Die weitere zweite Steuereinheit 14' ist dabei in einem zweiten Kraftfahrzeug 11' angeordnet.

Da vorliegend zumindest ein über den Fahrzeug-Datenbus 3 übermittelbares Steuersignal, im gezeigten Beispiel wie in Fig. 1 drei übermittelbare Steuersignale, als eine jeweilige von einem für den Fahrzeug-Datenbus 3 spezifischen Busprotokoll unabhängig zugängliche Geräteressource 9a,9b, 9c eines Betriebssystemkerns des ersten Steuergeräts 1 bereitgestellt ist, kann nun in den zweiten Steuereinheiten 14, 14' die jeweils gewünschte Geräteressource 9a,9b,9c der ersten Steuereinheit 1 über ein Netzwerkprotokoll der Internet-Protokoll-basierten Netzwerke 16,16' gemountet werden und somit an ein jeweiliges Anwendungsprogramm 17,17' bereitgestellt werden. Das jeweilige Anwendungsprogramm 17,17', hier das erste Anwendungsprogramm 17 in der einen zweiten Steuereinheit 14 und das zweite Anwendungsprogramm 17' in der weiteren zweiten Steuereinheit 14', entspricht hier dem Anwendungsprogramm 6a, 6b (Fig. 1), ist nur physisch außerhalb der ersten Steuereinheit 1 existent. Dies ist ohne Funktionseinbuße möglich, da beispielsweise über ein Netzwerk-Dateisystem wie das Network File System von Sun Microsystems die Geräteressource 9a, 9b, 9c der ersten Steuereinheit 1 im Netzwerk 16, 16' bereitgestellt oder gemountet werden kann.

Für das jeweilige Anwendungsprogramm 17,17' in der zweiten Steuereinheit 14,14' ist somit die jeweilige Geräteressource 9a,9b,9c wie eine lokal in der zweiten Steuereinheit 14,14' vorhandene Geräteressource behandelbar. Damit muss das Anwendungsprogramm 17,17' in der zweiten Steuereinheit 14,14' ebenso wie die Anwendungsprogramme 6a, 6b (Fig. 1) in der elektronischen ersten Steuereinheit 1 nicht an jeweilige busspezifische Protokolle oder sonstige Eigenschaften des Fahrzeug-Busses 3 angepasst werden. Es wird somit eine große Flexibilität erreicht, da beispielsweise das erste Anwendungsprogramm 17 bei einer ausreichenden Rechenkraft auch ohne ein Anpassen von des ersten Anwendungsprogramms 17 und/oder der ersten Steuereinheit 1 in der ersten Steuereinheit 1 ausgeführt und verortet sein könnte.

Auch kann, beispielsweise in einer anderen Netzwerkstruktur eines anderen Fahrzeugmodells das erste Anwendungsprogramm 17 in der zweiten Steuereinheit 14 über eine andere erste Steuereinheit 1 an den oder einen anderen Fahrzeug-Datenbus 3 gekoppelt werden, ohne an die andere erste Steuereinheit und/oder eine jeweilige Art oder Eigenschaft des Fahrzeug-Datenbusses 3 angepasst werden zu müssen.

Im gezeigten Beispiel ist nun auch die weitere zweite Steuereinheit 14' des zweiten Kraftfahrzeugs 11', über das Internet-Protokoll-basierte Netzwerk 16' mit der ersten Steuereinheit 1 gekoppelt. Auf diese Weise kann das zweite Anwendungsprogramm 17' in der weiteren zweiten Steuereinheit 14' über die weitere zweite Netzwerk-Schnittstelle 15' ebenfalls auf übermittelbare Steuersignale des Fahrzeug-Datenbusses 3 des ersten Kraftfahrzeugs 11 zugreifen. Somit kann beispielsweise das zweite Kraftfahrzeug 11' bzw. die weitere zweite Steuereinheit 14' des zweiten Kraftfahrzeugs 11 frühzeitig über den Fahrzeug-Datenbus 3 des ersten Kraftfahrzeugs 11 als Steuersignal Brems- und/oder Beschleunigungsmanöver abfragen und entsprechend reagieren. Dabei sind komplexe Erfassungsschritte, welche auf Erkennungsalgorithmen eines Verhaltens des beispielsweise vorherfahrenden ersten Kraftfahrzeugs 11 basieren nicht erforderlich, sodass die beschriebene Funktionalität mit einem besonders geringen Entwicklungsaufwand realisiert wird.

## Patentansprüche

1. Steuersystem (12) für zumindest ein Kraftfahrzeug (11,11'), mit
- einer ersten Steuereinheit (1), welche eine Datenschnittstelle (2) zum Koppeln der ersten Steuereinheit (1) mit einem Fahrzeug-Datenbus (3) aufweist, sowie eine erste Netzwerk-Schnittstelle (13) zum Koppeln der ersten Steuereinheit (1) mit einer zweiten Steuereinheit (14, 14') über ein Internet-Protokoll-basiertes Netzwerk (16, 16') aufweist;
- der zweiten Steuereinheit (14, 14'), welche eine zweite Netzwerk-Schnittstelle (15, 15') zum Koppeln der zweiten Steuereinheit (14, 14') mit der ersten Steuereinheit (1) über das Internet-Protokoll-basierte Netzwerk (16, 16') aufweist;
wobei die zweite Steuereinheit (14, 14') ausgelegt ist, zumindest ein über den Fahrzeug-Datenbus (3) übermittelbares Steuersignal mittels der ersten Steuereinheit (1) über den Fahrzeug-Datenbus (3) zu senden oder zu empfangen;
**dadurch gekennzeichnet, dass**
- die erste Steuereinheit (1) ausgelegt ist, das zumindest eine über den Fahrzeug-Datenbus (3) übermittelbare Steuersignal als zumindest eine von einem für den Fahrzeug-Datenbus (3) spezifischen Busprotokoll unabhängig zugängliche Geräteressource (9a, 9b, 9c) eines Betriebssystemkerns des ersten Steuergeräts (1) bereitzustellen
und
- die zweite Steuereinheit (14, 14') ausgelegt ist, die Geräteressource (9a, 9b, 9c) der ersten Steuereinheit (1) über ein Netzwerkprotokoll des Internet-Protokoll-basierten Netzwerks (16, 16') an zumindest ein Anwendungsprogramm (17, 17') in der zweiten Steuereinheit (14, 14') bereitzustellen.

2. Steuersystem (12) nach Anspruch 1,
**dadurch gekennzeichnet, dass**
der Fahrzeug-Datenbus (3) einen CAN-Datenbus oder einen LIN-Datenbus oder einen FlexRay-Datenbus umfasst.

3. Steuersystem (12) nach einem der vorhergehenden Ansprüche,
**dadurch gekennzeichnet, dass**
die zumindest eine Geräteressource (9a, 9b, 9c) über ein Netzwerk-Datei-System in dem Internet-Protokoll-basierten Netzwerk (16, 16') bereitstellbar ist.

4. Steuersystem (12) nach einem der vorhergehenden Ansprüche,
**dadurch gekennzeichnet, dass**
das Internet-Protokoll-basierte Netzwerk (16, 16') ein drahtloses Netzwerk (16') umfasst, insbesondere ein drahtloses lokales Netzwerk.

5. Steuersystem (12) nach Anspruch 4,
**dadurch gekennzeichnet, dass**
die erste Steuereinheit (1) Teil eines ersten Kraftfahrzeugs (11) ist und die zweite Steuereinheit (14, 14') Teil eines zweiten Kraftfahrzeugs (11') ist.

6. Steuersystem (12) nach Anspruch 5,
**dadurch gekennzeichnet, dass**
die zweite Steuereinheit (14, 14') ausgelegt ist, das übermittelbare Steuersignal lediglich zu empfangen.

7. Steuersystem (12) nach einem der Ansprüche 4 oder 5,
**dadurch gekennzeichnet, dass**
das übermittelbare Steuersignal Fahrzeugdaten des ersten Kraftfahrzeugs (11) umfasst, insbesondere Beschleunigungsdaten und/oder Geschwindigkeitsdaten und/oder Routendaten eines Navigationssystems des ersten Kraftfahrzeugs (11).

8. Steuersystem (12) nach einem der vorhergehenden Ansprüche,
**dadurch gekennzeichnet, dass**
die Geräteressource (9a, 9b, 9c) ein virtuelles Gerät und/oder eine Datei umfasst, insbesondere eine Systemdatei zum Laden und Verfügbar machen von zumindest einem Standardgerätetreiber und zum Laden eines Dateisystemtreibers sowie zum Bereitstellen eines Datenträgerzugriffs.

9. Steuersystem (12) nach einem der vorhergehenden Ansprüche,
**dadurch gekennzeichnet, dass**
über entsprechende Befehle an den Betriebssystemkern der ersten Steuereinheit (1) durch die die bereitgestellte Geräteressource (9a, 9b, 9c) für zumindest ein Anwendungsprogramm (17, 17') in der zweiten Steuereinheit (14, 14') zugänglich und unzugänglich machbar ist, sowie über entsprechende weitere Befehle an den Betriebssystemkern ein zu sendendes übermittelbares Steuersignal über den Fahrzeug-Datenbus (3) sendbar und/oder ein zu empfangendes übermittelbares Steuersignal über den Fahrzeug-Datenbus (3) empfangbar ist.

10. Verfahren zum Betreiben eines Steuersystems (12) für zumindest ein Kraftfahrzeug (11, 11'), wobei das Steuersystem (12) zwei Steuereinheiten (1, 14, 14') umfasst, wobei
- die erste Steuereinheit (1) eine Datenschnittstelle (2) zum Koppeln der ersten Steuereinheit (1) mit einem Fahrzeug-Datenbus (3) aufweist, sowie eine erste Netzwerk-Schnittstelle (13) zum Koppeln der ersten Steuereinheit (1) mit einer zweiten Steuereinheit (14, 14') über ein Internet-Protokoll-basiertes Netzwerk (16, 16') aufweist; und
- die zweite Steuereinheit (14, 14'), welche eine zweite Netzwerk-Schnittstelle (15, 15') zum Koppeln der zweiten Steuereinheit (14, 14') mit der ersten Steuereinheit (1) über das Internet-Protokoll-basierte Netzwerk (16, 16') aufweist;
mit einem:
- Senden oder Empfangen von zumindest einem über den Fahrzeug-Datenbus (3) übermittelbaren Steuersignal über den Fahrzeug-Datenbus (3) durch die zweite Steuereinheit (14, 14') mittels der ersten Steuereinheit (1);
**gekennzeichnet durch** ein
- Bereitstellen des zumindest einen über den Fahrzeug-Datenbus (3) übermittelbaren Steuersignals als zumindest eine, von einem für den Fahrzeug-Datenbus (3) spezifischen Busprotokoll unabhängig zugängliche Geräteressource (9a, 9b, 9c) eines Betriebssystemkerns des ersten Steuergeräts (1) durch die erste Steuereinheit (1); und ein
- Bereitstellen der Geräteressource (9a, 9b, 9c) der ersten Steuereinheit (1) über ein Netzwerkprotokoll des Internet-Protokoll-basierten Netzwerks (16, 16') an zumindest ein Anwendungsprogramm (17, 17') in der zweiten Steuereinheit (14, 14') durch die zweite Steuereinheit (14, 14'); wobei
- das Senden oder Empfangen des übermittelbaren Steuersignals ein Zugreifen des Anwendungsprogramms (17, 17') der zweiten Steuereinheit (14, 14') auf die Geräteressource (9a, 9b, 9c) der ersten Steuereinheit (1) über das Netzwerkprotokoll umfasst.

## Claims

1. Control system (12) for at least one motor vehicle (11, 11'), with
- a first control unit (1), having a data interface (2) for coupling the first control unit (1) to a vehicle data bus (3), as well as a first network interface (13) for coupling the first control unit (1) to a second control unit (14, 14') via an internet protocol-based network (16, 16');
- the second control unit (14, 14'), having a second network interface (15, 15') for coupling the second control unit (14, 14') to the first control unit (1) via the internet protocol-based network (16, 16');
wherein the second control unit (14, 14') is designed to send or receive at least one control signal that can be transmitted via the vehicle data bus (3) by means of the first control unit (1) via the vehicle data bus (3);
**characterised in that**
- the first control unit (1) is designed to provide the at least one control signal that can be transmitted via the vehicle data bus (3) as at least one device resource (9a, 9b, 9c) of an operating system core of the first control device (1), said device resource being accessible independently from a bus protocol that is specific to the vehicle data bus (3),
- the second control unit (14, 14') is designed to provide the device resource (9a, 9b, 9c) of the first control unit (1) to at least one application program (17, 17') in the second control unit (14, 14') via a network protocol of the internet protocol-based network (16, 16').

2. Control system (12) according to claim 1,
**characterised in that**
the vehicle data bus (3) comprises a CAN data bus or an LIN data bus or a FlexRay data bus.

3. Control system (12) according to any one of the preceding claims,
**characterised in that**
the at least one device resource (9a, 9b, 9c) can be provided via a network file system in the internet protocol-based network (16, 16').

4. Control system (12) according to any one of the preceding claims,
**characterised in that**
the internet protocol-based network (16, 16') comprises a wireless network (16'), in particular a wireless local network.

5. Control system (12) according to claim 4,
**characterised in that**
the first control unit (1) is part of a first motor vehicle (11) and the second control unit (14, 14') is part of a second motor vehicle (11').

6. Control system (12) according to claim 5,
**characterised in that**
the second control unit (14, 14') is designed to receive only the transmittable control signal.

7. Control system (12) according to claim 4 or 5,
**characterised in that**
the transmittable control signal comprises vehicle data of the first motor vehicle (11), in particular acceleration data and/or speed data and/or route data of a navigation system of the first motor vehicle (11).

8. Control system (12) according to any one of the preceding claims,
**characterised in that**
the device resource (9a, 9b, 9c) comprises a virtual device and/or a file, in particular a system file for loading and making available at least one standard device driver and for loading a file system driver and for providing a data carrier access.

9. Control system (12) according to any one of the preceding claims,
**characterised in that**
via the relevant command on the operating system core, the first control unit (1) can be made accessible and inaccessible by the the provided device resource (9a, 9b, 9c) for at least one application program (17, 17') in the second control unit (14, 14'), and via a further relevant command on the operating system core a transmittable control signal to be sent can be sent via the vehicle data bus (3) and/or a transmittable control signal to be received can be received via the vehicle data bus (3).

10. Method for operating a control system (12) for at least one motor vehicle (11, 11'), wherein the control system (12) comprises two control units (1, 14, 14'), wherein
- the first control unit (1) has a data interface (2) for coupling the first control unit (1) to the vehicle data bus (3), as well as a first network interface (13) for coupling the first control unit (1) to a second control unit (14, 14') via an internet protocol-based network (16, 16'); and
- the second control unit (14, 14'), that has a second network interface (15, 15') for coupling the second control unit (14, 14') to the first control unit (1) via the internet protocol-based network (16, 16'),
with:
- sending or receiving at least one control signal that can be transmitted via the vehicle data bus (3) via the vehicle data bus (3) by the second control unit (14, 14') by means of the first control unit (1);
**characterised by**
- providing the at least one control signal that can be transmitted via the vehicle data bus (3) as at least one device resource (9a, 9b, 9c) of an operating system core of the first control device (1) by the first control unit (1), said device resource being accessible independently from a bus protocol that is specific to the vehicle data bus (3);
and
- providing the device resource (9a, 9b, 9c) of the first control unit (1) via a network protocol of the internet protocol-based network (16, 16') to at least one application program (17, 17') in the second control unit (14, 14') via the second control unit (14, 14'); wherein
- sending or receiving the transmittable control signal comprises access of the application program (17, 17') of the second control unit (14, 14') to the device resource (9a, 9b, 9c) of the first control unit (1) via the network protocol.

## Revendications

1. Système de commande (12) pour au moins un véhicule automobile (11, 11'), avec
- une première unité de commande (1), qui présente une interface de données (2) servant à coupler la première unité de commande (1) à un bus de données de véhicule (3), ainsi qu'une première interface de réseau (13) servant à coupler la première unité de commande (1) à une deuxième unité de commande (14, 14') par l'intermédiaire d'un réseau basé sur le protocole Internet (16, 16') ;
- la deuxième unité de commande (14, 14'), qui présente une deuxième interface de réseau (15, 15') servant à coupler la deuxième unité de commande (14, 14') à la première unité de commande (1) par l'intermédiaire du réseau basé sur le protocole Internet (16, 16') ;
dans lequel la deuxième unité de commande (14, 14') est configurée pour envoyer ou recevoir, par l'intermédiaire du bus de données de véhicule (3), au moins un signal de commande pouvant être transmis par l'intermédiaire du bus de données de véhicule (3) au moyen de la première unité de commande (1) ;
**caractérisé en ce que**
- la première unité de commande (1) est configurée pour fournir l'au moins un signal de commande pouvant être transmis par l'intermédiaire du bus de données de véhicule (3) en tant qu'au moins une ressource d'appareil (9a, 9b, 9c) accessible indépendamment d'un protocole de bus spécifique au bus de données de véhicule (3) d'un noyau de système d'exploitation du premier appareil de commande (1), et
- la deuxième unité de commande (14, 14') est configurée pour fournir la ressource d'appareil (9a, 9b, 9c) de la première unité de commande (1) par l'intermédiaire d'un protocole de réseau du réseau basé sur le protocole Internet (16, 16') à au moins un programme d'application (17, 17') dans la deuxième unité de commande (14, 14').

2. Système de commande (12) selon la revendication 1,
**caractérisé en ce que**
le bus de données de véhicule (3) comprend un bus de données CAN ou un bus de données LIN ou un bus de données FlexRay.

3. Système de commande (12) selon l'une quelconque des revendications précédentes,
**caractérisé en ce que**
l'au moins une ressource d'appareil (9a, 9b, 9c) peut être fournie par l'intermédiaire d'un système de fichier de réseau dans le réseau basé sur le protocole Internet (16, 16').

4. Système de commande (12) selon l'une quelconque des revendications précédentes,
**caractérisé en ce que**
le réseau basé sur le protocole Internet (16, 16') comprend un réseau sans fil (16'), en particulier un réseau local sans fil.

5. Système de commande (12) selon la revendication 4,
**caractérisé en ce que**
la première unité de commande (1) fait partie d'un premier véhicule automobile (11) et la deuxième unité de commande (14, 14') fait partie d'un deuxième véhicule automobile (11').

6. Système de commande (12) selon la revendication 5,
**caractérisé en ce que**
la deuxième unité de commande (14, 14') est configurée pour recevoir seulement le signal de commande pouvant être transmis.

7. Système de commande (12) selon l'une quelconque des revendications 4 ou 5, **caractérisé en ce que**
le signal de commande pouvant être transmis comprend des données de véhicule du premier véhicule automobile (11), en particulier des données d'accélération et/ou des données de vitesse et/ou des données d'itinéraire d'un système de navigation du premier véhicule automobile (11).

8. Système de commande (12) selon l'une quelconque des revendications précédentes,
**caractérisé en ce que**
la ressource d'appareil (9a, 9b, 9c) comprend un appareil virtuel et/ou un fichier, en particulier un fichier de système servant à charger et à mettre à disposition au moins un pilote d'appareil standard et servant à charger un pilote de système de fichier ainsi qu'à fournir un accès de support de données.

9. Système de commande (12) selon l'une quelconque des revendications précédentes,
**caractérisé en ce que**
par la la ressource d'appareil (9a, 9b, 9c) fournie peut être rendue accessible et inaccessible, par l'intermédiaire d'instructions correspondantes au noyau de système d'exploitation de la première unité de commande (1), pour au moins un programme d'application (17, 17') dans la deuxième unité de commande (14, 14') et un signal de commande pouvant être transmis à envoyer peut être envoyé, par l'intermédiaire du bus de données de véhicule (3), par l'intermédiaire d'autres instructions correspondantes au noyau de système d'exploitation et/ou un signal de commande pouvant être transmis à recevoir peut reçu par l'intermédiaire du bus de données de véhicule (3).

10. Procédé servant à faire fonctionner un système de commande (12) pour au moins un véhicule automobile (11, 11'), dans lequel le système de commande (12) comprend deux unités de commande (1, 14, 14'), dans lequel
- la première unité de commande (1) présente une interface de données (2) servant à coupler la première unité de commande (1) à un bus de données de véhicule (3), et présente une première interface de réseau (13) servant à coupler la première unité de commande (1) à une deuxième unité de commande (14, 14') par l'intermédiaire d'un réseau basé sur le protocole Internet (16, 16') ; et
- la deuxième unité de commande (14, 14'), qui présente une deuxième interface de réseau (15, 15') servant à coupler la deuxième unité de commande (14, 14') à la première unité de commande (1) par l'intermédiaire du réseau basé sur le protocole Internet (16, 16') ;
avec :
- un envoi ou une réception, par l'intermédiaire du bus de données de véhicule (3), d'au moins un signal de commande pouvant être transmis par l'intermédiaire du bus de données de véhicule (3) par la deuxième unité de commande (14, 14') au moyen de la première unité de commande (1) ;
**caractérisé par**
- une fourniture de l'au moins un signal de commande pouvant être transmis par l'intermédiaire du bus de données de véhicule (3) en tant qu'au moins une ressource d'appareil (9a, 9b, 9c) accessible indépendamment d'un protocole de bus spécifique au bus de données de véhicule (3) d'un pilote de système d'exploitation du premier appareil de commande (1) par la première unité de commande (1) ; et
- une fourniture de la ressource d'appareil (9a, 9b, 9c) de la première unité de commande (1) par l'intermédiaire d'un protocole de réseau du réseau basé sur le protocole Internet (16, 16') à au moins un programme d'application (17, 17') dans la deuxième unité de commande (14, 14') par la deuxième unité de commande (14, 14') ; dans lequel
- l'envoi ou la réception du signal de commande pouvant être transmis comprend un accès du programme d'application (17, 17') de la deuxième unité de commande (14, 14') à la ressource d'appareil (9a, 9b, 9c) de la première unité de commande (1) par l'intermédiaire du protocole de ressource.
